# EUROPEAN PATENT SPECIFICATION

(11) **EP 2 448 746 B1**
(45) Date of publication and mention of the grant of the patent: **13.05.2015**
(21) Application number: 09786496.1
(22) Date of filing: 02.07.2009
(51) Int. Cl.: B29C 53/50, B65H 23/18, B31B 19/10, B31B 23/00

(54) **MACHINE FOR OBTAINING A PACKAGING TUBULAR WEB**
MASCHINE ZUR HERSTELLUNG EINER ROHRFÖRMIGEN VERPACKUNGSFOLIENBAHN
MACHINE POUR OBTENIR UN FILM D'EMBALLAGE TUBULAIRE

(43) Date of publication of application: 09.05.2012
(73) Proprietor: B.m.s. S.n.c. Di Podesta' Giovanni E C., 29012 Caorso (PC) (IT)
(72) Inventor: CHIAPPINI, Giuseppe, 29027 San Polo di Podenzano (PC) (IT)
(74) Representative: Siniscalco, Fabio
(86) International application number: PCT/IB2009/052873
(87) International publication number: WO 2011/001215

(56) References cited:
- EP-A1- 0 949 174
- GB-A- 741 906
- US-A- 3 037 868
- US-A- 3 355 996
- US-A- 3 834 969
- US-A- 5 833 107

## Description

The invention relates to a machine for obtaining a packaging tubular web. The machine is able to obtain from a reel of film a packaging tubular web, in particular having a bellows shape that can be subsequently cut transversely to obtain bags of desired dimensions.

A machine is known that unwinds a film of heat-weldable plastics from a first reel, longitudinally folds the film such as to obtain a packaging tubular web that is gradually wound so as to generate a second reel.

Such a machine is e.g. known from US3037868.

The film advances from the first reel to the second reel, interacting with a series of fixed guiding rollers and with a welding device that welds opposite longitudinal flaps of the film, such as to obtain the packaging tubular web. The diameter of the first reel, during operation, decreases through the progressive unwinding of the film, whilst the diameter of the second reel increases as the packaging tubular web is progressively wound thereupon. The decrease in the unwinding diameter on the one hand and the increase in the winding diameter on the other hand influences the advancing speed and the tension of the film. The machine is provided with a tensioning device that comprises a floating guiding roller, the position of which varies according to the tension of the film. The floating guiding roller is connected to a tensioning spring that acts to preload the floating guiding roller or is supported by a rocker arm that oscillates around an axis parallel to the floating guiding roller. The rocker arm has a certain weight that is such as to exert a certain tension on the film.

A drawback of the known machine disclosed above is due to the limited versatility thereof. In particular, the tensioning device is configured for exerting a given tensioning force that can be suitable for a particular type of film material and for a particular machining to be performed on the film, but which may not be suitable for other types of film having different features or for particular machinings to which to subject the films. In particular, the tensioning spring, or the rocker arm, not being able to be set at will, do not enable the operating parameters to be chosen freely and flexibly with which it is desired that the film be processed. In fact, the action exerted on the film depends on the preset and constraining structural features of the tensioning spring, or of the rocker arm.

Another drawback of the known machine is that it is not possible to regulate the advancing speed of the film during machining effectively. In particular, the machine is not able to control the rotation speed of the first reel and/or of the second reel accurately.

A further drawback of the known machine is that the tensioning device does not enable the film tension to be adjusted with sufficient precision. Wear to the mechanical parts can further lead to a reduction in the sensibility of the tensioning device and thus to a deterioration in the quality of the machining of the film.

An object of the invention is to improve the machines for obtaining packaging tubular webs.

Another object is to supply a machine for obtaining packaging tubular webs from a film, the machine having great versatility of use and being able to control the tension and speed of the film with very great accuracy and rapidity. According to the invention, a machine is provided for obtaining a packaging tubular web as defined in claim 1.

The invention can be better understood and implemented with reference to the enclosed drawings that illustrate an embodiment thereof by way of non-limiting example, in which:

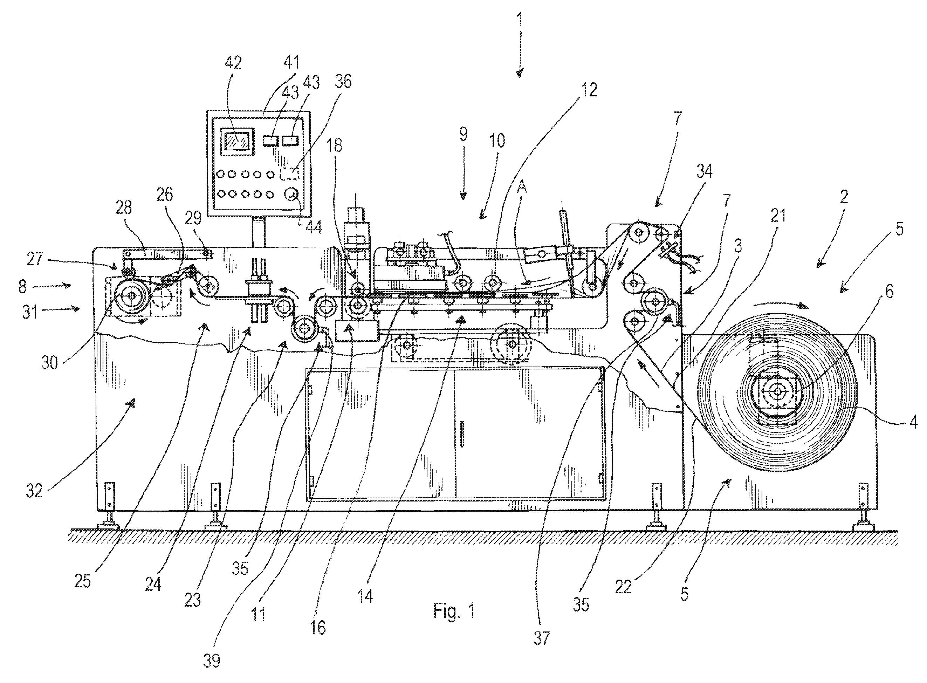

Figure 1 is a partially sectioned frontal view of a machine according to the invention for obtaining a packaging tubular web from a film;
Figure 2 is a top view of the machine in Figure 1;

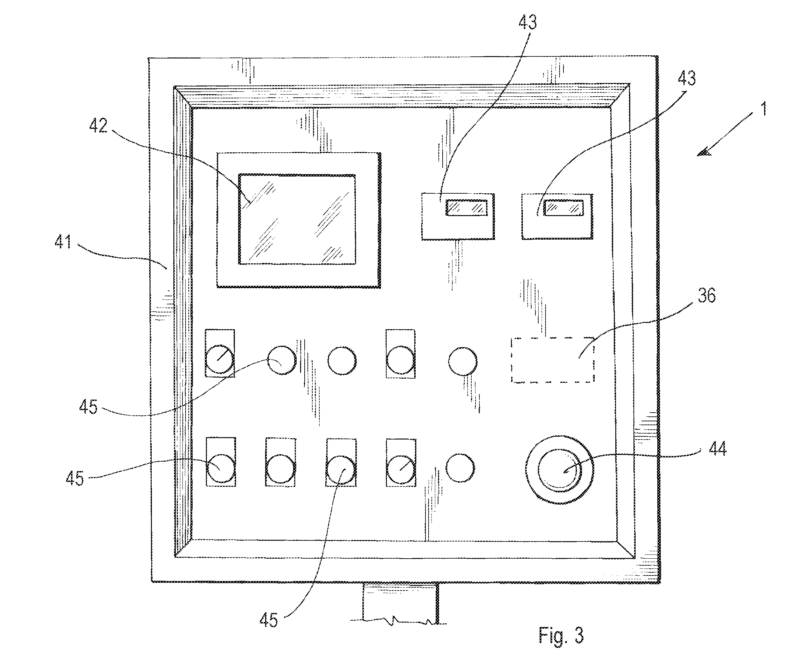

Figure 3 schematically shows a control panel of the machine;
Figure 4 is a fragmentary view that shows an intermediate portion of the machine;
Figure 5 is a lateral and fragmentary view that shows a portion of the machine in an unwinding zone in which the film is unwound from a first reel;
Figure 6 is a perspective and fragmentary view of a further portion of the machine;
Figure 7 is a perspective and fragmentary view of a detail of the machine;

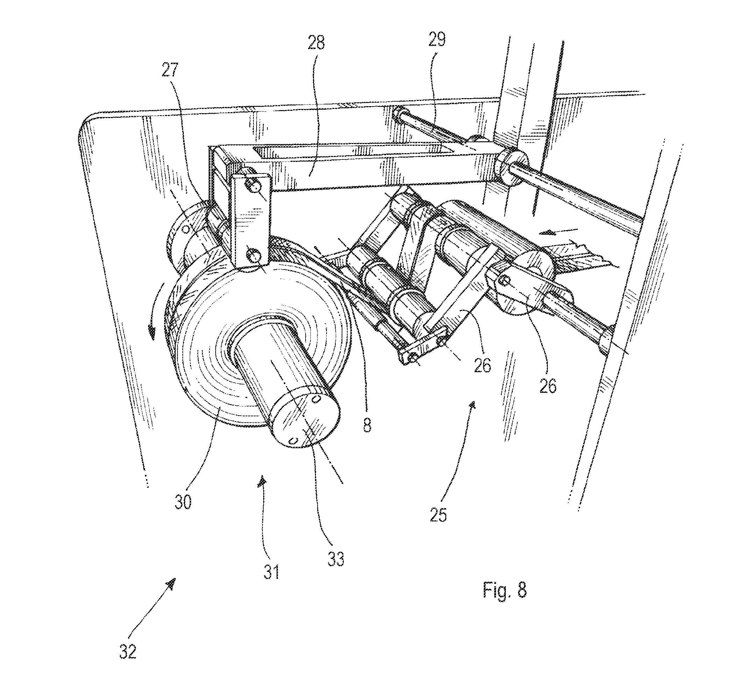

Figure 8 shows a further portion of the machine in a winding zone in which the film is wound to generate a second reel. With reference to Figures 1 to 8, there is shown a machine 1 configured for processing a film 3 so as to give the latter a tubular shape, in particular a bellows tubular shape.

The machine 1 enables a bellows tubular film to be obtained from a film 3 initially wound in a reel, i.e. a packaging tubular web 8 from which bags having desired dimensions can be obtained. Such bags can be used for various purposes, for example to contain pharmaceutical products or other products.

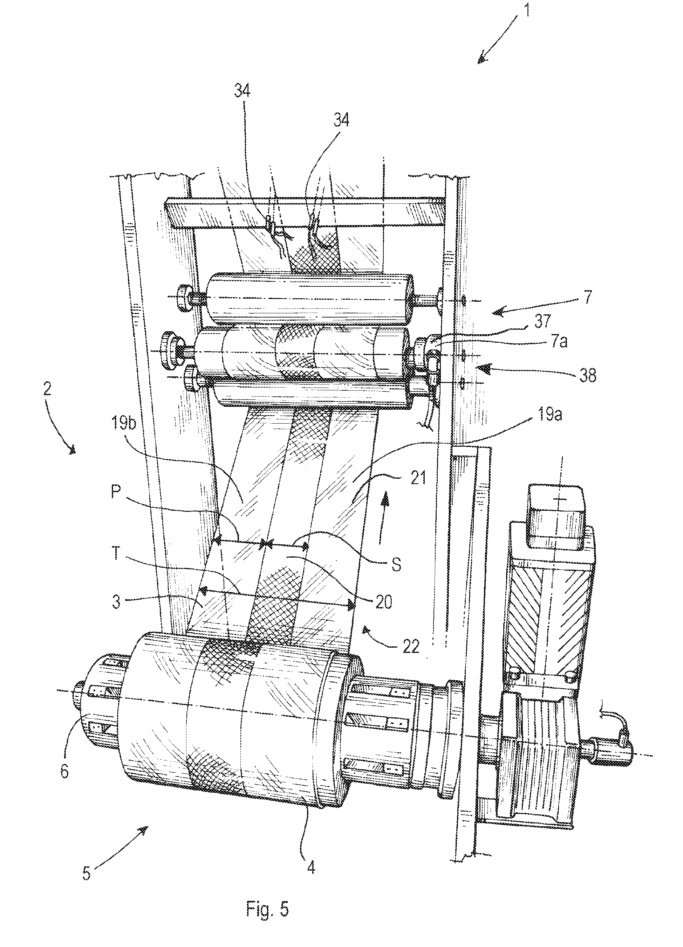

The film 3 in particular comprises heat-weldable plastics. In the disclosed embodiment, as more clearly visible in Figure 5, the film 3 comprises side zones 19a and 19b, for example transparent side zones, extending longitudinally and mutually separate from a central zone 20. The central zone 20, as in the disclosed embodiment, is a precursor of a bag wall. The central zone 20 may comprise an opaque surface that is able to retain an ink. This enables bags to be obtained from the film 3 that have a wall on which, in an automatic way or by hand with a simple pen, information can be written relating to the products that are packaged with the bags. In particular, the film 3 has a first face 21, which in Figure 5 faces upwards, intended for generating an internal surface of the bags obtained from the film 3, and a second face 22, ih Figure 5 facing downwards, intended for generating an external surface of such bags.

Each of the side zones 19a and 19b has a first width P, and the central zone 20 has a second width S. The film 3, before being processed, has an overall width T.

The machine 1 comprises an unwinding zone 2 in which a film 3 is positionable that is initially wound on a first reel 4. The reel 4 is supported by an unwinding unit 5.

The unwinding unit 5 comprises a first expansion shaft 6 on which the first reel 4 is mounted and which can be driven by a suitable pneumatic circuit and a pneumatic lever tap. The latter enable the first reel 4 to be centred with precision on the first expansion shaft 6.

The machine 1 comprises first guiding rollers 7 that are suitable for guiding the film 3 and are located further downstream of the unwinding zone 2 with respect to an advancing path A of the film 3.

Near the first guiding rollers 7 there are provided position sensors 34 that detect the position of the film 3 so as to ensure correct positioning of the film 3 transversely with respect to the direction in which it advances.

Downstream of the guiding rollers 7 there is provided a dragging roller 11, cooperating with an abutting roller 18 for promoting the advance of the film 3 and/or of the bellows packaging tubular web 8 obtained from the latter. The dragging roller 11 can be rubber-coated to have a more effective grip on the packaging tubular web 8.

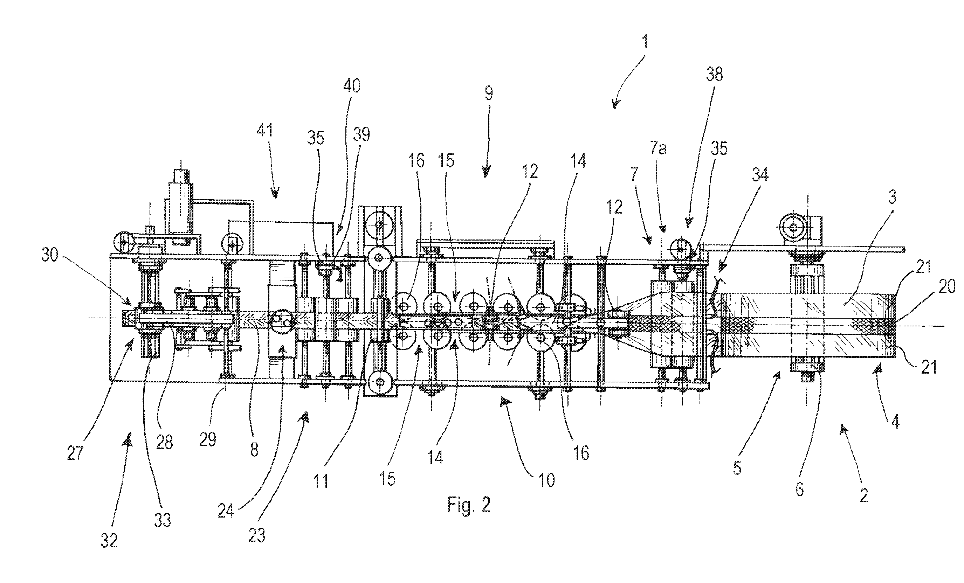

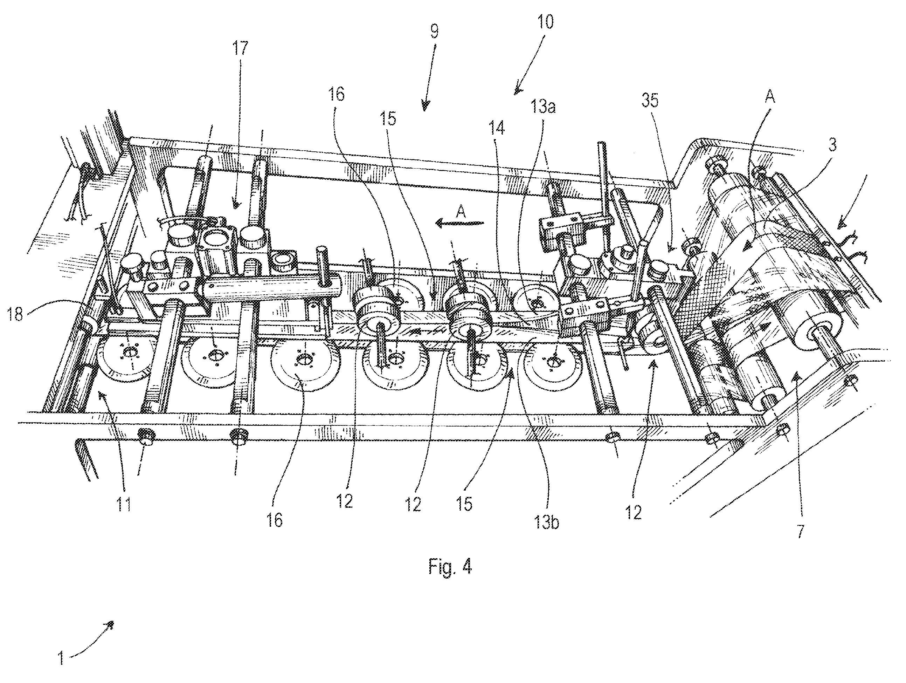

In an operating zone 9 comprised between the first guiding rollers 7 and the dragging roller 11 there is provided an operating unit 10 configured for processing the film 3 such as to obtain from the latter the packaging tubular web 8. The operating unit 10, which is more clearly visible in Figures 2 and 4, comprises an abutting bar 14 that extends longitudinally for a certain portion of the machine 1. The abutting bar 14 comprises an upper flat surface and a lower flat surface, suitable for slidably supporting portions of the film 3, in particular suitable for restingly receiving zones of the first face 21 of the film 3.

The operating unit 10 comprises a plurality of wheel elements 12 that cooperate with the aforesaid abutting bar 14 to fold the film 3 longitudinally. The wheel elements 12 rotate around mutually tilted horizontal axes so as to guide and suitably wind the film 3 around the abutting bar 14. In particular, the film 3 is wound with the first face 21 in contact with the abutting bar 14.

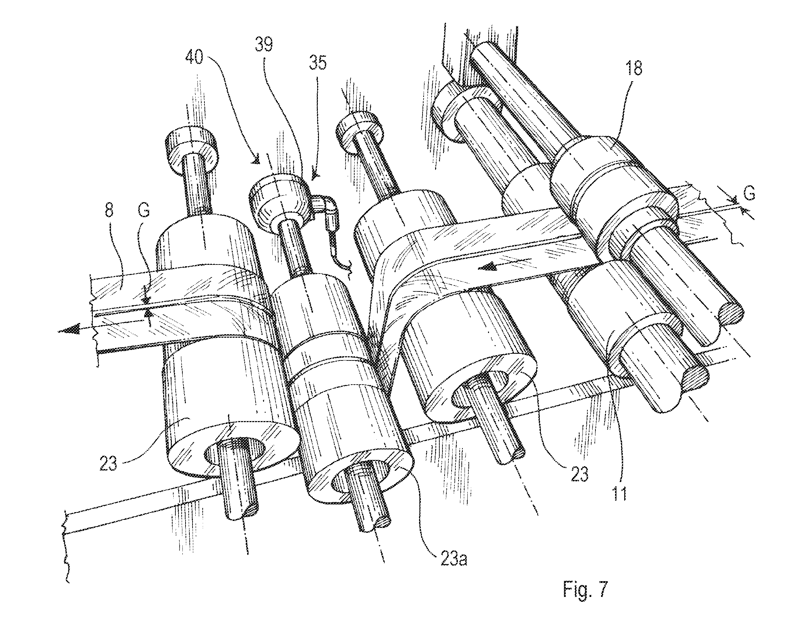

The wheel elements 12 are arranged so as to fold longitudinally a first flap 13a and a second flap 13b of the film 3 that are opposite one another on the upper flat surface of the abutting bar 14. Along the abutting bar 14 two side cavities 15 extend laterally opposite one another, configured to cooperate with a plurality of disk elements 16 that are rotatable around vertical axes. The side cavities 15 receive in the interior thereof at least partially the respective disk elements 16. The disk elements 16 act on the film 3, forcing part of the film to penetrate inside the respective side cavities 15 so as to assume a bellows shape. The wheel elements 12, the disk elements 16 and the abutting bar 14 cooperate mutually so that the central zone 20 of the film 3 lies on the lower flat surface of the abutting bar 14, a first part of each side zone 19 is housed inside a respective lateral cavity 15, so as to take on a broken transverse profile and a second part of each side zone 19 lies on the upper surface of the abutting bar 14. The second parts of the lateral zones 21 are positioned on the flat upper surface of the abutting bar 14 so as to be superimposed on one another only by a given amount, so as to define a superimposed zone G (shown in Figure 7). In other words, the superimposed zone G is generated from the first flap 13a and from the second flap 13b of the film 3 that are superimposed on one another.

The operating unit 10 is provided with a welding device 17 configured for mutually heat-welding the first flap 13a and the second flap 13b, i.e. the superimposed zone G, such as to obtain a joining zone welded so as to generate the bellows-shaped packaging tubular web 8. The welding device comprises a welding pad 17 that cooperates with the flat upper surface of the abutting bar 14 and extends longitudinally for a certain portion of the latter.

The machine 1 is provided with a cooling system that is used to cool, by means of a jet of cold air, the zones of the film, or rather the packaging tubular web 8, which have been affected by the action of the welding pad 17, in particular the welded joining zone. The dragging roller 11, together with the abutting roller 18, located downstream of the welding pad 17, act on the bellows packaging tubular web 8 to flatten the tubular web as it leaves the abutting bar 14, so that the shaped side parts are folded and flattened between the lower wall and the upper wall of the packaging tubular web 8.

Some components of the machine 1 that are intended for interacting in contact with the film, or are suitable for slidably supporting the latter, comprise surfaces made of a material with a low friction coefficient, such as Teflon ^{®}, which significantly reduces the risk of damage to the film. Downstream of the dragging roller 11 there are provided second guiding rollers 23 that interact with the packaging tubular web 8.

Downstream of the second guiding rollers 23 there is provided a blanking unit 24 suitable for blanking the packaging tubular web 8 according to various requirements. There is provided a sucking and collecting system for removing the chips generated by the blanking unit 24. Downstream of the operating zone 9 there is provided a winding zone 32 of the packaging tubular web 8. The machine 1 comprises, in the winding zone 32, a winding unit 31 configured for winding the progressively generated packaging tubular web 8, such as to obtain a second reel 30. The winding unit 31 comprises a second expansion shaft 33 that is suitable for supporting the second reel 30 and is drivable via the pneumatic circuit that drives the first expansion shaft 6, or is drivable with a further dedicated pneumatic circuit, provided with a pressure adjustment system.

The machine 1 comprises third guiding rollers 25 suitable for interacting with the packaging tubular web 8 and located downstream of the blanking unit 24.

The third guiding rollers 25, via articulated arms 26, can change position according to the position and/or tension of the packaging tubular web 8.

Near the second expansion shaft 33 there is provided an accompanying roller 27 mounted on an accompanying arm 28 that can oscillate around an axis 29. The accompanying roller 27 acts to ensure correct winding of the packaging tubular web 8 on the second reel 30.

The machine 1 is provided with a control panel 41 through which it is possible to intervene on the operation of the machine 1 and/or to set process parameters.

The control panel 41 is provided with a display 42 and with indicators 43 for displaying data and/or useful information to an operator. The control panel 41 is provided with an emergency switch 44, for stopping the machine 1 in the event of an emergency, and with a series of control pushbuttons 45 that give various commands to the machine 1. The various commands, comprise, for example: resetting the machine 1 after the emergency stop, starting up and stopping the machine 1, selecting the operation of the machine 1 in automatic or manual mode, locking and releasing the winding unit 31 and/or the unwinding unit 5, driving the blanking unit 24, etc.

The machine 1 comprises tension sensor means 35 for detecting the tension of the film 3 and/or of the bellows packaging tubular web 8. The machine 1 comprises control means 36 cooperating with the tension sensor means 35 to control the tension of the film in function of film unwinding and/or winding parameters, such as winding and unwinding speed. The control means 36 can be located, for example, inside the control panel 41.

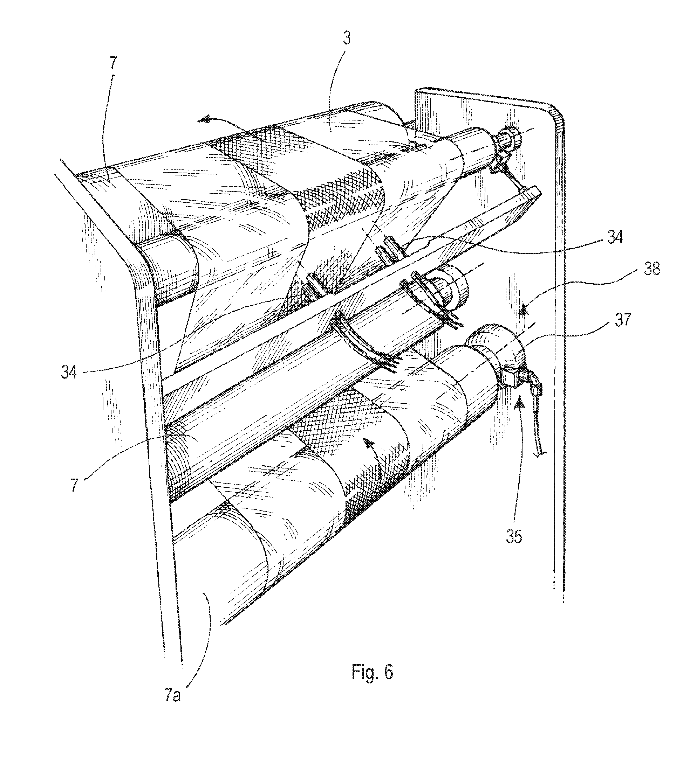

The tension sensor means 35 is positioned near one or more first guiding rollers 7 and/or on one or more second guiding rollers 23. In particular, the tension sensor means 35 comprises a first tension sensor 37, positioned upstream of the operating unit 10. In particular, the first tension sensor 37 is positioned at a first end 38 of a first guiding roller 7a, as is more clearly visible in Figures 5 and 6. During operation, the film 3 is advanced by interacting with the first guiding roller 7a. The film 3, in contact with the first guiding roller 7a, exerts on the latter a certain force that is linked to the tension to which the film 3 is subjected. This force exerted on the first guiding roller 7a is detected by the first tension sensor 37.

The tension sensor means 35 comprises a second tension sensor 39, positioned at a second end 40 of a second guiding roller 23a, as is more clearly visible in Figure 7.

During operation, the bellows packaging tubular web 8, obtained from the film 3, is advanced by interacting with the second guiding roller 23a. The bellows packaging tubular web 8, in contact with the second guiding roller 23a, exerts on the latter a certain force that is linked to the tension to which the packaging tubular web 8 is subjected. This force exerted on the second guiding roller 23a is detected by the second tension sensor 39.

The sensor means 35 may provide a plurality of tension sensors arranged on several zones of the machine 1 according to the configurations that it is desired to obtain.

The tension sensor means 35 detects the tension of the film 3 and/or of the packaging tubular web 8 and generates a signal that is received by the control means 36 that in turn acts to vary the rotation speed of the unwinding unit 5, and/or to vary the rotation speed of the winding unit 31 so as to control the tension of the film 3 and/or of the packaging tubular web 8.

Owing to the configuration disclosed above, the machine 1 is able to increase automatically the rotation speed of the first reel 5, or to decrease the rotation speed of the second reel 30 so as to maintain the film tension at a desired value.

If the sensor means 35 should detect an increase in the film tension value, the control means 36 would act to increase the unwinding speed of the film 3 from the first reel 4, and/or to decrease the winding speed of the packaging tubular web 8 on the second reel 30.

The sensor means 35, such as the first tension sensor 37 and the second tension sensor 39, may comprise load cells. Owing to the sensor means 35 and to the control means 36, the film can be processed in optimum conditions. In particular, it is possible to take account of the progressive variations in the diameter of the first reel 4 and of the second reel 30 and of the influence that such diameter variations have on the advancing speed and tension of the film 3 and/or of the packaging tubular web 8.

Owing to the sensor means 35 and to the control means 36, the machine 1 has great versatility of use and is able to adapt promptly and with great precision and sensitivity the operating conditions with which the film is processed. The machine 1 is able to adapt the advancing speed and the tension of the film in function of the features of the film. Owing to the sensor means 35 and the control means 36, the machine 1 is thus able to adapt to various types of film to be processed.

## Claims

1. Machine for obtaining a packaging tubular web (8) from a film (3), comprising:
- unwinding means (5) for unwinding said film (3) from a first reel (4);
- operating means (10, 12, 14, 16, 17) for processing said film (3) such as to obtain said packaging tubular web (8);
- winding means (31) for winding said packaging tubular web (8) on a second reel (30);
**characterized by comprising:**
- sensor means (35, 37, 39) for detecting the tension of said film (3) and/or of said packaging tubular web (8);
- and control means (36) cooperating with said sensor means (35, 37, 39) to control the tension of said film (3) and/or of said packaging tubular web (8) in function of unwinding parameters of said film (3) and/or winding parameters of said packaging tubular web (8),
wherein said control means (36) is configured for varying the speed of said unwinding means (5) and/or of said winding means (31) on the basis of signals sent by said sensor means (35, 37, 39).

2. Machine according to claim 1, further comprising guiding roller means (7, 23) for guiding said film (3) and said packaging tubular web (8) along an advancing path.

3. Machine according to claim **2,** wherein said guiding roller means comprises first guiding rollers (7) placed upstream of said operating means (10, 12, 14, 16, 17) for guiding said film (3), and second guiding rollers (23) located downstream of said operating means (10, 12, 14, 16, 17) for guiding said packaging tubular web (8).

4. Machine according to any one of claims 1 to **3,** wherein said sensor means (35, 37, 39) is mounted at said guiding roller means (7, 23).

5. Machine according to claim **4,** as appended to claim **3,** wherein said sensor means comprises a first tension sensor (37) associated with a first guiding roller (23a) of said first guiding rollers (7), and a second tension sensor (39) associated with a second guiding roller (23a) of said second guiding rollers (7).

6. Machine according to claim **5,** wherein said first tension sensor (37) is mounted on a first end (38) of said first guiding roller (23a), and said second tension sensor (39) is mounted at a second end (40) of said second guiding roller (7).

7. Machine according to any preceding claim, further comprising position sensor means (34) to control the position of said film (3) during advancing.

8. Machine according to any one of claims 1 to **7,** wherein said operating means comprises wheel elements (12) and an abutting bar (14) that mutually cooperate to fold said film (3) longitudinally.

9. Machine according to claim **8,** wherein said operating means comprises disk elements (16) cooperating with side cavities (15) opposite said abutting bar (14) to confer a bellows shape on said packaging tubular web (8).

10. Machine according to any preceding claim, and further comprising a blanking unit (24) for blanking said packaging tubular web (8).

11. Machine according to any preceding claim, further comprising a control panel (41) for controlling the operation of said machine (1) and/or for setting process parameters.

12. Maschine according to claim **11,** wherein said control panel (41) is provided with display devices (42, 43) for displaying data and/or useful information to an operator.

13. Machine according to any one of claims 1 to **12,** wherein said sensor means comprises load cell means (35, 37, 39).

## Patentansprüche

1. Maschine zum Erhalten eines röhrenförmigen Verpackungsgewebes (8) von einem Film (3), die Folgendes aufweist:
- Abwickelmittel (5) zum Abwickeln des Films (3) von einer ersten Rolle (4);
- Betriebsmittel (10, 12, 14, 16, 17) zum Verarbeiten des Films (3), so dass das röhrenförmige Verpackungsgewebe (8) erhalten wird;
- Aufwickelmittel (31) zum Aufwickeln des röhrenförmigen Verpackungsgewebes (8) auf eine zweite Rolle (30);
**dadurch gekennzeichnet, dass sie Folgendes aufweist:**
- Sensormittel (35, 37, 39) zum Detektieren der Spannung des Films (3) und/oder des röhrenförmigen Verpackungsgewebes (8);
- und Steuerungsmittel (36), die mit den Sensormitteln (35, 37, 39) kooperieren, um die Spannung des Films (3) und/oder des röhrenförmigen Verpackungsgewebes (8) in Abhängigkeit der Abwickelparameter des Films (3) und/oder der Aufwickelparameter des röhrenförmigen Verpackungsgewebes (8) steuern, wobei die Steuerungsmittel (36) konfiguriert sind, um die Geschwindigkeit der Abwickelmittel (5) und/oder der Aufwickelmittel (31) auf der Basis von Signalen zu variieren, die durch die Sensormittel (35, 37, 39) gesendet werden.

2. Maschine gemäß Anspruch 1, die ferner Führungsrollenmittel (7, 23) aufweist, um den Film (3) und das röhrenförmige Verpackungsgewebe (8) entlang eines Förderwegs führen.

3. Maschine gemäß Anspruch 2, wobei die Führungsrollenmittel erste Führungsrollen (7) aufweisen, die stromaufwärts der Betriebsmittel (10, 12, 14, 16, 17) platziert sind, um den Film (3) zu führen, und zweite Führungsrollen (23) aufweisen, die stromabwärts der Betriebsmittel (10, 12, 14, 16, 17) lokalisiert sind, um das röhrenförmige Verpackungsgewebe (8) zu führen.

4. Maschine gemäß einem der Ansprüche 1 bis 3, wobei die Sensormittel (35, 37, 39) an den Führungsrollenmitteln (7, 23) befestigt sind.

5. Maschine gemäß Anspruch 4, sofern auf Anspruch 3 rückbezogen, wobei die Sensormittel einen ersten Spannungssensor (37) aufweisen, der einer ersten Führungsrolle (23a) der ersten Führungsrollen (7) zugeordnet ist, und einen zweiten Spannungssensor (39) aufweisen, der einer zweiten Führungsrolle (23a) der zweiten Führungsrollen (7) zugeordnet ist.

6. Maschine gemäß Anspruch 5, wobei der erste Spannungssensor (37) an einem ersten Ende (38) der ersten Führungsrolle (23a) befestigt ist, und wobei der zweite Spannungssensor (39) an einem zweiten Ende (40) der zweiten Führungsrolle (7) befestigt ist.

7. Maschine gemäß einem der vorherigen Ansprüche, die ferner Positionssensormittel (34) aufweist, um die Position des Films (3) während des Fortschreitens zu steuern.

8. Maschine gemäß einem der Ansprüche 1 bis 7, wobei die Betriebsmittel Radelemente (12) und eine Angrenzstange (14) aufweisen, die miteinander kooperieren, um den Film (3) längs zu falten.

9. Maschine gemäß Anspruch 8, wobei die Betriebsmittel Scheibenelemente (16) aufweisen, die mit seitlichen Kavitäten (15) kooperieren, die gegenüber der Angrenzstange (14) angeordnet sind, um dem röhrenförmigen Verpackungsgewebe (8) eine Balgform zu verleihen.

10. Maschine gemäß einem der vorherigen Ansprüche, die ferner eine Stanzeinheit (24) zum Stanzen des röhrenförmigen Verpackungsgewebes (8) aufweist.

11. Maschine gemäß einem der vorherigen Ansprüche, die ferner ein Steuerungsfeld (41) zum Steuern des Betriebs der Maschine (1) und/oder für das Festsetzen von Verarbeitungsparametern aufweist.

12. Maschine gemäß Anspruch 11, wobei das Steuerungsfeld (41) mit einer Anzeigevorrichtung (42, 43) zum Anzeigen von Daten und/oder nützlichen Informationen an einen Bediener versehen ist.

13. Maschine gemäß einem der Ansprüche 1 bis 12, wobei die Sensormittel Kraftmessmittel (35, 37, 39) aufweisen.

## Revendications

1. Machine pour obtenir un film d'emballage tubulaire (8) à partir d'un film (3), comprenant :
- des moyens de déroulage (5) pour dérouler ledit film (3) à partir d'un premier rouleau (4) ;
- des moyens d'exploitation (10, 12, 14, 16, 17) pour traiter ledit film (3) afin d'obtenir ledit film d'emballage tubulaire (8) ;
- des moyens d'enroulage (31) pour enrouler ledit film d'emballage tubulaire (8) sur un deuxième rouleau (30) ;
**caractérisée en ce qu'**elle comprend :
- des moyens de capteur (35, 37, 39) pour détecter la tension dudit film (3) et/ou dudit film d'emballage tubulaire (8) ;
- et des moyens de commande (36) coopérant avec lesdits moyens de capteur (35, 37, 39) pour contrôler la tension dudit film (3) et/ou dudit film d'emballage tubulaire (8) en fonction de paramètres de déroulage dudit film (3) et/ou de paramètres d'enroulage dudit film d'emballage tubulaire (8),
lesdits moyens de commande (36) étant configurés pour faire varier la vitesse desdits moyens de déroulage (5) et/ou desdits moyens d'enroulage (31) sur la base de signaux envoyés par lesdits moyens de capteur (35, 37, 39).

2. Machine selon la revendication 1, comprenant en outre des moyens de rouleaux de guidage (7,23) pour guider ledit film (3) et ledit film d'emballage tubulaire (8) le long d'un chemin de progression.

3. Machine selon la revendication 2, dans laquelle lesdits moyens de rouleaux de guidage comprennent des premiers rouleaux de guidage (7) situés en amont desdits moyens d'exploitation (10, 12, 14, 16, 17) pour guider ledit film (3), et des deuxièmes rouleaux de guidage (23) situés en aval desdits moyens d'exploitation (10, 12, 14, 16, 17) pour guider ledit film d'emballage tubulaire (8).

4. Machine selon l'une quelconque des revendications 1 à 3, dans laquelle lesdits moyens de capteur (35, 37, 39) sont montés au niveau desdits moyens de rouleaux de guidage (7, 23).

5. Machine selon la revendication 4, dans la mesure où elle dépend de la revendication 3, dans laquelle lesdits moyens de capteur comprennent un premier capteur de tension (37) associé à un premier rouleau de guidage (23a) desdits premiers rouleaux de guidage (7), et un deuxième capteur de tension (39) associé à un deuxième rouleau de guidage (23a) desdits deuxièmes rouleaux de guidage (7).

6. Machine selon la revendication 5, dans laquelle ledit premier capteur de tension (37) est monté sur une première extrémité (38) dudit premier rouleau de guidage (23a), et ledit deuxième capteur de tension (39) est monté à une deuxième extrémité (40) dudit deuxième rouleau de guidage (7).

7. Machine selon une quelconque revendication précédente, comprenant en outre des moyens de capteur de position (34) pour contrôler la position dudit film (3) pendant la progression.

8. Machine selon l'une quelconque des revendications 1 à 7, dans laquelle lesdits moyens d'exploitation comprennent des éléments à roue (12) et une barre de contact (14) qui coopèrent mutuellement pour plier ledit film (3) longitudinalement.

9. Machine selon la revendication 8, dans laquelle lesdits moyens d'exploitation comprennent des éléments à disque (16) coopérant avec des cavités latérales (15) en face de ladite barre de contact (14) pour conférer une forme de soufflet audit film d'emballage tubulaire (8).

10. Machine selon une quelconque revendication précédente, et comprenant en outre une unité de découpage (24) pour découper ledit film d'emballage tubulaire (8).

11. Machine selon une quelconque revendication précédente, comprenant en outre un panneau de commande (41) pour contrôler le fonctionnement de ladite machine (1) et/ou pour régler des paramètres de processus.

12. Machine selon la revendication 11, dans laquelle ledit panneau de commande (41) est prévu avec des dispositifs d'affichage (42, 43) pour afficher des données et/ou des informations utiles destinées à un opérateur.

13. Machine selon l'une quelconque des revendications 1 à 12, dans laquelle lesdits moyens de capteur comprennent des moyens de cellules de charge (35, 37, 39).
